# EUROPÄISCHE PATENTSCHRIFT

(11) **EP 3 295 060 B1**
(45) Veröffentlichungstag und Bekanntmachung des Hinweises auf die Patenterteilung: **05.02.2020**
(21) Anmeldenummer: 16717100.8
(22) Anmeldetag: 19.04.2016
(51) Int. Cl.: F16H 57/025, F16H 57/021, F16H 1/46, F16H 57/00, F16H 57/029, F16H 57/04, F16H 57/02, F03D 7/02

(54) **GETRIEBE MIT EINER IN EINEM FLANSCHTEIL MITTELS EINES LAGERS GELAGERTEN EINTREIBENDEN WELLE**
GEARING HAVING A DRIVING SHAFT SUPPORTED IN A FLANGE PART BY MEANS OF A BEARING
TRANSMISSION COMPORTANT UN ARBRE D'ENTRAÎNEMENT MONTÉ DANS UNE BRIDE AU MOYEN D'UN PALIER

(30) Priorität: 13.05.2015 DE 102015006023
(43) Veröffentlichungstag der Anmeldung: 21.03.2018
(73) Patentinhaber: SEW-EURODRIVE GmbH & Co. KG, 76646 Bruchsal (DE)
(72) Erfinder: RODARTE, Rafael, 13340-350 Indaiatuba - SP (BR)
(86) Internationale Anmeldenummer: PCT/EP2016/000637
(87) Internationale Veröffentlichungsnummer: WO 2016/180512

(56) Entgegenhaltungen:
- EP-A1- 1 674 761
- CN-U- 202 170 967
- CN-U- 202 360 724
- JP-A- H08 254 258
- JP-A- S58 156 356

## Beschreibung

Die Erfindung betrifft ein Getriebe mit einer in einem Flanschteil mittels eines Lagers gelagerten eintreibenden Welle.

Es ist allgemein bekannt, dass die Wellen eines Getriebes mittels Lager drehbar gelagert sind.

Aus der CN 202 170 967 U ist als nächstliegender Stand der Technik ein Planetengetriebe mit einem eine Ausnehmung zur Ölbefüllung verschließenden Verschlussmittel bekannt.

Aus der EP 1 674 761 A1 ist ebenfalls ein Planetengetriebe bekannt.

Aus der CN 202 360 724 U ist ein beschichteter Deckel bekannt.

Aus der JP H08 254258 A ist ein Planetengetriebe bekannt, das unempfindlich gegen thermische Ausdehnung ist.

Aus der JP S58 156356 A ist ein Getriebe einer Kopiermaschine bekannt.

Der Erfindung liegt daher die Aufgabe zugrunde, ein Getriebe einfach und kostengünstig herstellbar und wartbar zu machen.

Erfindungsgemäß wird die Aufgabe bei dem Getriebe nach den in Anspruch 1 angegebenen Merkmalen gelöst.

Wichtige Merkmale bei dem Getriebe mit einer in einem Flanschteil mittels eines Lagers gelagerten eintreibenden Welle sind, dass die eintreibende Welle hohl ausgeführt ist,
wobei die eintreibende Welle eine mittig in der eintreibenden Welle angeordnete, axial durchgehende, Ausnehmung aufweist,
wobei die Ausnehmung mittels eines Deckelteils abgedichtet ist,
wobei das Lager im Flanschteil aufgenommen ist,
wobei das Flanschteil zumindest eine durch das Flanschteil durchgehende Ausnehmung aufweist,
wobei der von der durchgehenden Ausnehmung überdeckte axiale Bereich mit dem von dem Lager überdeckten axialen Bereich zumindest überlappt.

Von Vorteil ist dabei, dass die eintreibende Welle aus einem anderen Material als das Sonnenrad herstellbar ist. Außerdem ist die Verzahnung der eintreibenden Welle durch Räumen, also im Unterschied zum Stoßen mittels eines durchgehenden Bearbeitungsverfahrens herstellbar. Darüber hinaus ist am Flanschteil, also am Lagerflansch des eintreibenden Lagers, ein Nachfüllen des Schmieröls durch die Ausnehmung hindurch ermöglicht.

Durch die hohle Ausführung der eintreibenden Welle ist die antreibende Welle drehfest mit ihr zu verbindende Motorwelle mittels Einstecken formschlüssig drehfest verbindbar. Dies führt darüber hinaus zu einer kompakten Lösung.

Erfindungsgemäß weist das Deckelteil einen mit einer Kunststoffbeschichtung versehenen metallischen Grundkörper auf,
insbesondere wobei die Kunststoffbeschichtung die Innenwandung der eintreibenden Welle berührt. Von Vorteil ist dabei, dass die Kunststoffschicht elastisch verdrückt wird und sich anschmiegt an die Unebenheiten des aufnehmenden Teils, also der eintreibenden Welle. Somit ist eine hohe Dichtheit ohne besonderen Aufwand erreichbar. Allerdings muss das Deckelteil stabil ausgerichtet sein. Hierzu weist es einen kragenförmigen Abschnitt auf, der axial hervorsteht und an der Innenwandung der eintreibenden Welle anliegt, wobei die Kunststoffschicht eine direkte Berührung verhindert und auch die Korrosion verhindert, insbesondere Reibungskorrosion.

Bei einer vorteilhaften Ausgestaltung weist das Flanschteil eine mittig angeordnete durchgehende Bohrung auf, in welcher das Lager aufgenommen ist,
insbesondere wobei das Flanschteil eine ringförmige Vertiefung aufweist, wobei die Ringachse koaxial zur Wellenachse der eintreibenden Welle ausgerichtet ist,
insbesondere wobei die durchgehende Ausnehmung in die ringförmige Vertiefung mündet,
insbesondere wobei die ringförmige Vertiefung ein Teilbereich des ölbefüllten Innenraums des Getriebes ist. Von Vorteil ist dabei, dass eine Befüllung des Schmieröls sogar im vom Lager überdeckten axialen Bereich ermöglicht ist. Dabei ist eine sehr kompakte Lösung ausführbar bei gleichzeitig wenig aufwendigem Herstellprozess. Denn das Flanschteil im Beriech des eintreibenden Lagers ist viel dünnwandiger als im abtreibenden Lagerbereich.

Bei einer vorteilhaften Ausgestaltung ist das Flanschteil mit einem Gehäuseteil, insbesondere Hohlrad, des Getriebes verbunden, wobei der Verbindungsbereich, insbesondere Berührbereich zwischen Flanschteil und Gehäuseteil, auf größerem Radialabstand angeordnet ist als das Lager,
insbesondere wobei also der vom Lager überdeckte Radialabstandsbereich wertemäßig beabstandet ist von dem vom Verbindungsbereich zwischen Flanschteil und Gehäuseteil überdeckten Radialabstandsbereich. Von Vorteil ist dabei, dass das Flanschteil auf einem größeren Durchmesser verbindbar ist mit dem Gehäuseteil als dem Durchmesser des Lagers der eintreibenden Welle entspricht.

Bei einer vorteilhaften Ausgestaltung ist im Flanschteil ein Wellendichtring aufgenommen, der auf der eintreibenden Welle läuft. Von Vorteil ist dabei, dass der Getriebeinnenraum zum antreibenden Motor hin abgedichtet ist.

Bei einer vorteilhaften Ausgestaltung weist die eintreibende Welle eine Innenverzahnung auf. Von Vorteil ist dabei,
dass die Motorwelle mittels Verzahnung verbindbar ist, also drehfest verbindbar in einfacher Weise, wobei ein hohes Drehmoment übertragbar ist.

Erfindungsgemäß steht die Innenverzahnung einer Kupplungshülse mit der Außenverzahnung der eintreibenden Welle und mit der Verzahnung eines Sonnenrads des Getriebes im Eingriff. Von Vorteil ist dabei, dass die Kupplungshülse ebenfalls durchgehend bearbeitbar ist, also mit einem durchgehenden Bearbeitungsverfahren, wie Räumen oder Power skiving.

Bei einer vorteilhaften Ausgestaltung ist die durch das Flanschteil durchgehende Ausnehmung mit einem Verschlussmittel verschlossen,
insbesondere wobei das Verschlussmittel einen Dauermagnet aufweist, insbesondere zum Herausziehen von ferromagnetischen Partikeln aus dem Schmieröl des Getriebes. Von Vorteil ist dabei, dass das Getriebe öldicht hergestellt ist. Durch das Herausziehen der Partikel ist eine längere Standzeit der Getriebestufen erreichbar.

Bei einer vorteilhaften Ausgestaltung sind mehrere durch das Flanschteil durchgehende Ausnehmungen in Umfangsrichtung regelmäßig voneinander beabstandet,
insbesondere wobei die Ausnehmungen auf der gleichen axialen Position und auf dem gleichen Radialabstand angeordnet sind,
insbesondere wobei die Ausnehmungen alle in die ringförmige Vertiefung münden. Von Vorteil ist dabei, dass das Öl im Beriech des eintreibenden Lagers nachfüllbar ist und somit ein einfaches Warten des Getriebes ermöglicht ist. Außerdem ist der Schmierölnachfüllpunkt somit möglichst nahe am Zentrum des Windraftwerks ermöglicht und nicht im Bereich der Flügel.

Bei einer vorteilhaften Ausgestaltung ist das Sonnenrad mit Planetenrädern im Eingriff, welche mit der Innenverzahnung des Hohlrades im Eingriff sind, wobei die Planetenräder auf einem Planetenträger drehbar gelagert angeordnet sind, der direkt oder indirekt, insbesondere über eine oder mehrere weitere Getriebestufen, mit der Abtreibenden Welle verbunden ist. Von Vorteil ist dabei, dass ein Planetengetriebe vorsehbar ist.

Bei einer vorteilhaften Ausgestaltung weist die abtreibende Welle eine Verzahnung auf oder ist mit einem Verzahnteil drehfest verbunden, so dass ein anzutreibendes Hohlrad, das drehfest mit einem Flügel eines Windkraftwerks verbunden ist, antreibbar ist, insbesondere zur Pitchwinkelverstellung. Von Vorteil ist dabei, dass eine Pitchwinkelverstellung in einfacher Weise ermöglicht ist.

Bei einer vorteilhaften Ausgestaltung sind die Verzahnung oder die Verzahnungen der eintreibenden Welle mittels eines durchgehenden Bearbeitungsverfahrens hergestellt oder herstellbar,
insbesondere wie Räumen mit Räumwerkzeug, insbesondere Räumnadel, oder Power skiving. Von Vorteil ist dabei, dass ein einfaches und kostengünstiges Verfahren zum Herstellen ermöglicht ist.

Die Erfindung wird nun anhand von Abbildungen näher erläutert:
In der Figur 1 ist ein erfindungsgemäßes Planetengetriebe gezeigt, das mehrstufig ausgeführt ist und dessen eintreibende hohle Welle 8 mit einem Deckelteil 1 abgedichtet ist.

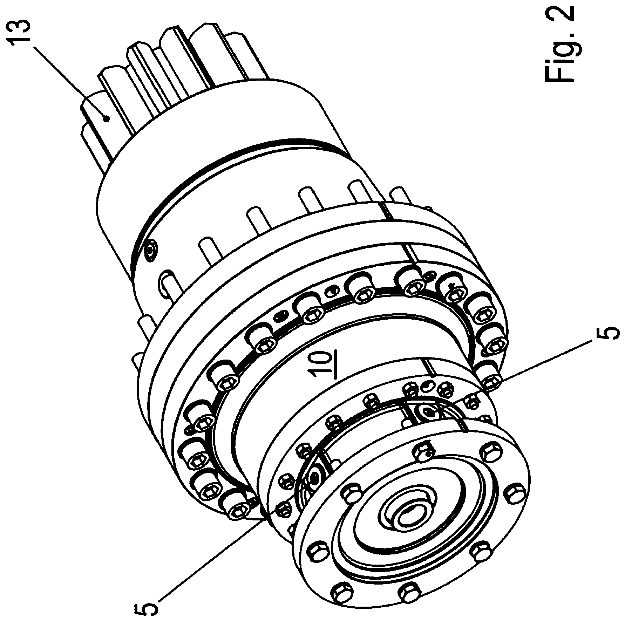

In Figur 2 ist die zugehörige Schrägansicht gezeigt.
In Figur 3 ist das Deckelteil 1 mit Plattenabschnitt 21, Kragenabschnitt 22 und Kunststoffschicht 20 im Querschnitt und nur schematisch gezeigt.

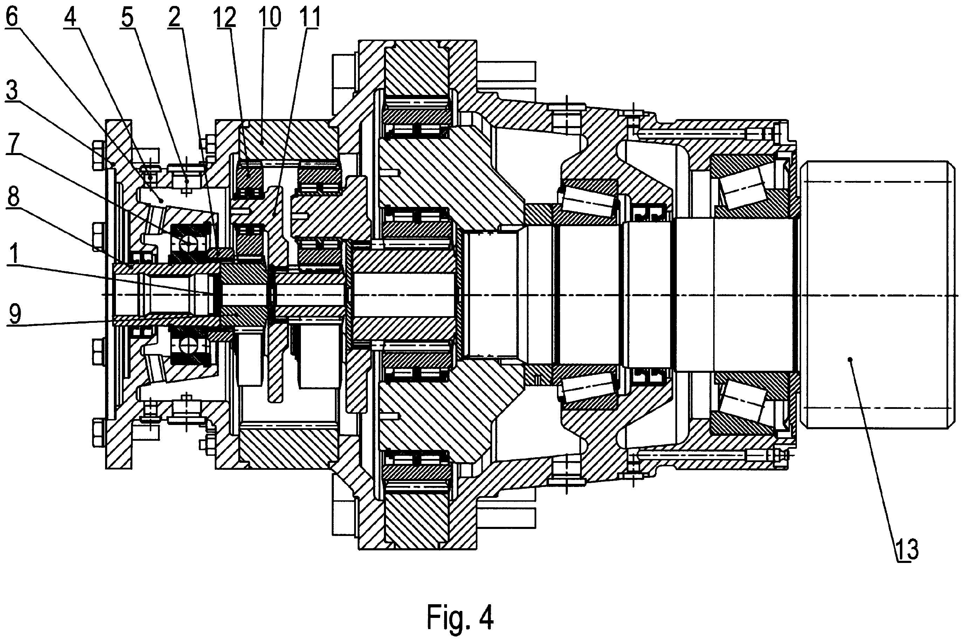

Figur 4 zeigt ein zu Figur 1 gleichartiges erfindungsgemäßes Ausführungsbeispiel.

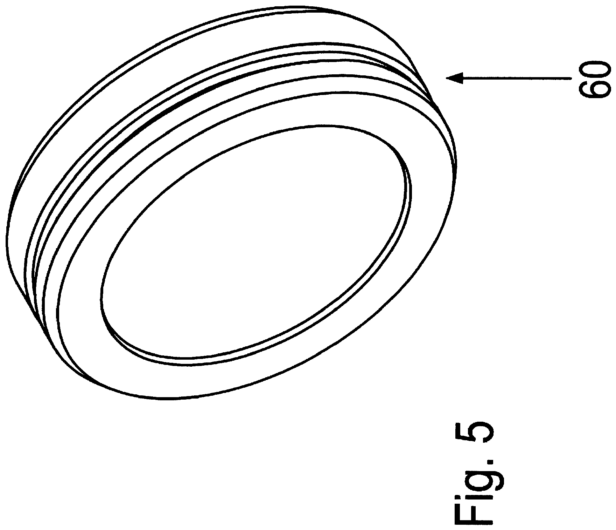

Figur 5 zeigt eine Schrägansicht eines anderen Deckelteils 60.
Figur 6 zeigt einen Querschnitt durch ein das Deckelteil 1 ersetzendes Deckelteil 60 für ein weiteres Ausführungsbeispiel.

Die eintreibende Welle 8 ist als Hohlwelle ausgeführt und weist an ihrer Innenseite eine Innenverzahnung auf, welche zur formschlüssigen Verbindung mit einer zu verbindenden Motorwelle vorgesehen ist, die eine entsprechende Außenverzahnung aufweist. Die Motorwelle wird beim Verbinden mit der eintreibenden Welle 8 axial eingeschoben, so dass die Innenverzahnung mit der Außenverzahnung in Eingriff kommt und eine drehfeste Verbindung zwischen Hohlwelle 8 und Motorwelle bewirkt ist.

Zum Getriebeinnenraum hin ist die hohle Welle 8 abgedichtet mit einem Deckelteil 1, das die Welle 8 verschließt. Das Deckelteil 1 weist einen metallischen Grundkörper und eine Kunststoffbeschichtung auf, welche elastisch verformt ist, so dass das Deckelteil 1 dicht verbunden ist mit der eintreibenden Welle 8. Somit ist die in die Welle 8 eingesteckte Motorwelle ebenfalls getrennt angeordnet vom ölbefüllten Innenraum des Getriebes.

Die eintreibende Welle 8 weist auch an ihrem zum Getriebeinnenraum hin ausgerichteten axialen Endbereich eine Außenverzahnung auf und ist koaxial zum Sonnenrad 9 des Getriebes ausgerichtet.

Eine innenverzahnte Kupplungshülse 2 ist einerseits teilweise auf die Außenverzahnung der eintreibenden Welle 8 und andererseits teilweise auf die Verzahnung des Sonnenrads 9.

Somit ist die eintreibende Welle 8 mittels der Kupplungshülse 2 mit dem Sonnenrad 9 drehfest verbunden.

Die eintreibende Welle 8 ist mittels des Lagers 7 in einem Flanschteil 3 gelagert, das mit einem als Gehäuseteil des Getriebes fungierenden Hohlrad 10 verbunden ist, insbesondere schraubverbunden.

Das Sonnenrad 9 ist im Eingriff mit auch mit der Innenverzahnung des Hohlrades im Eingriff stehenden Planetenrädern 12, welche drehbar gelagert sind am Planetenträger 11, der wiederum drehfest verbunden ist mit einem weiteren Sonnenrad einer weiteren Planetengetriebestufe, deren Planetenträger drehfest mit einem dritten Sonnenrad einer dritten Planetengetriebestufe verbunden ist, deren Planetenträger drehfest mit der abtreibenden Welle 13 verbunden ist oder einstückig mit dieser ausgebildet ist, also selbst als abtreibende Welle 13 fungiert.

Die abtreibende Welle 13 ist an ihrem äußeren axialen Endbereich mit einer Ritzelverzahnung versehen oder mit einem Ritzel drehfest verbunden, so dass dieses in ein innenverzahntes Hohlrad steckverbindbar ist, welches mit einem Flügel eines Windkraftwerks verbunden ist. Somit lässt sich der Pitchwinkel des Flügels verstellen, indem die Motorwelle die eintreibende Welle 8 des Getriebes entsprechend antreibt. Während des Betriebs des Windkraftwerks wird das Getriebe somit gedreht. Daher ist der Getriebeinnenraum mit Schmieröl befüllt.

Am Flanschteil 3 sind zwei axial voneinander beabstandete, durchgehende Ausnehmungen angeordnet. Somit ist Schmieröl durch eine der Ausnehmung einfüllbar. Die andere Ausnehmung ist mit einem Verschlussmittel verschließbar, das an seinem zum Getriebeinnenraum hin zugewandten Endbereich einen Dauermagnet aufweist, so dass ferromagnetische Partikel aus dem Schmieröl angezogen werden und somit das Schmieröl gereinigt ist.

Der von den beiden durchgehenden Ausnehmungen gemeinsam überdeckte Bereich überlappt zumindest mit dem vom Lager 7 der eintreibenden Welle 8 überdeckten axialen Bereich.

Somit sind die beiden Ausnehmungen zwar, insbesondere in radialer Richtung, durchgehend durch die Wandung des Flanschteils 3 und münden somit in den ölbefüllten Innenraum des Getriebes, allerdings ist zwischen Lager 7 und einer der Ausnehmungen in radialer Richtung gesehen sehr wohl Material des Flanschteils 3 angeordnet.

Denn das Flanschteil 3 ist topfförmig mit einem mittig sich vom Topfboden erhebenden hohlen Dom ausgeführt. Somit ist das Lager 7 gelagert innerhalb des Doms und die Ausnehmungen gehen durch die äußere Wandung des Topfes hindurch. Die Ausnehmungen münden also in die ringförmige Ausnehmung, insbesondere also ringförmigen Kanal, des Flanschteils 3 und das Lager 7 ist in der mittig angeordneten axial durchgehenden Bohrung des Flanschteils angeordnet.

Das Flanschteil 3 weist also eine ringförmige Ausnehmung 6 auf, wobei die Ringachse parallel zur axialen Richtung, also parallel zur Achsrichtung der eintreibenden Welle 8 ausgerichtet ist.

Die ringförmige Ausnehmung 6 ist mit dem schmierölbefüllten Innenraum des Getriebes verbunden, so dass das durch die Ausnehmung eingefüllte Öl in den Innenraum des Getriebes gelangt.

Im Betrieb sind beide Ausnehmungen mit einem Verschlussmittel 4, 5 verschlossen. Nur zu Inspektionszwecken, Wartungszwecken und/oder Schmieröleinfüllungen werden die Verschlussmittel 4, 5 entfernt.

Die abtreibende Welle 13 ist einseitig mit zwei Lagern gelagert, wobei die Lager auf der von der eintreibenden Welle 8 abgewandten axialen Seite der abtreibenden Welle 13 angeordnet sind.

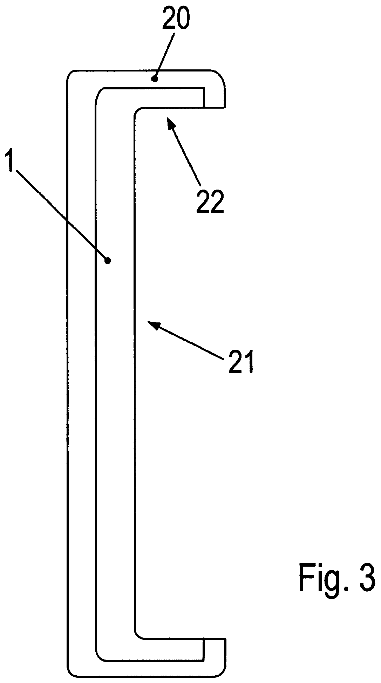

Wie in Figur 3 gezeigt, weist das Deckelteil 1 eine Kunststoffbeschichtung 20 auf, mit welcher das Deckelteil 1 an der Innenwandung der eintreibenden Welle 8 anliegt. Dabei wird die Kunststoffbeschichtung elastisch verformt, so dass eine öldichte Abdichtung realisiert ist.

Das Deckelteil 1 ist als Einschlagdeckel ausgeführt. Hierzu ist der axial hervorragende Kragenbereich 22 des Deckelteils 1 zum Ausrichten des Deckelteils 1 vorgesehen, also zur Ausrichtung des Plattenbereichs 21 des Deckelteils 1 in einer derartigen Richtung, dass die Normalenrichtung der Plattenebene koaxial zur Achsrichtung der eintreibenden Welle 8 gerichtet ist.

Die an der eintreibenden Welle 8 angeordnete Verzahnung ist mittels eines durchgehenden Bearbeitungsverfahrens, wie Räumnadel oder Power Sciving, herstellbar. Es muss also kein Stoßen zur Herstellung der Verzahnung angewendet werden. Somit ist die Verzahnung aber sehr schnell und einfach herstellbar.

Ebenso sind die Verzahnungen der Kupplungshülse 2 mit einem durchgehenden Bearbeitungsverfahren herstellbar wie auch die Verzahnung des Hohlrades 10 und/oder des Sonnenrades 9.

Die eintreibende Welle 8 ist aus einem anderen Material oder zumindest aus einem anders gehärteten Material herstellbar als das Sonnenrad 9 und/oder die Kupplungshülse 2.

Insbesondere ist die eintreibende Welle 8 gehärtet.

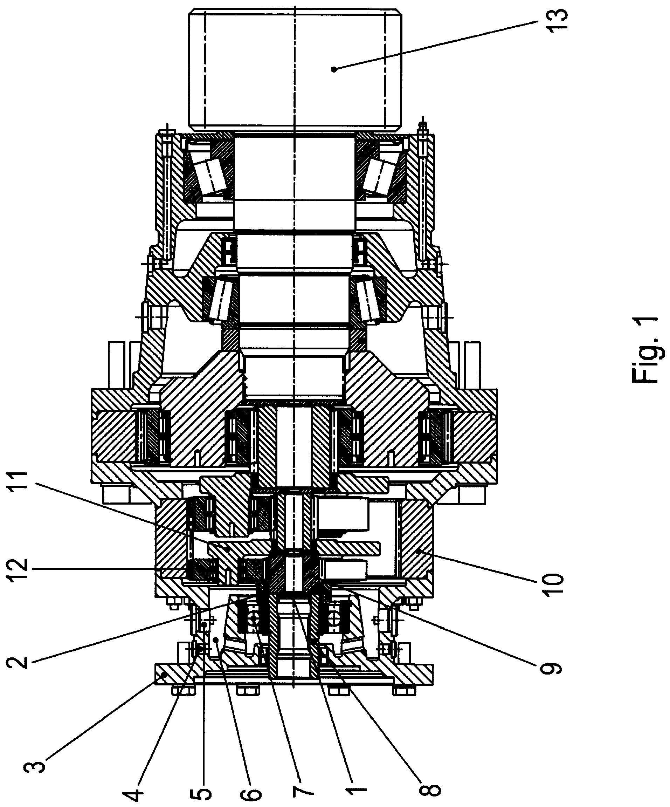

Da die eintreibende Welle 8 über das Lager 7 gelagert ist und mit der Motorwelle steckverbunden ist, fungiert ein in Figur 1 nicht gezeigtes Lager der in Figur 1 nicht gezeigten Motorwelle als weiteres Lager für die eintreibende Welle 8.

Zur weiteren Abdichtung der eintreibenden Welle 8 gegen das Flanschteil 3 sind zwei hintereinander angeordnete Wellendichtringe vorgesehen, die also im Flanschteil 3 aufgenommen sind und auf der eintreibenden Welle 8 laufen.

Vorteilhafterweise sind weitere in radialer Richtung durch die Wandung des Flanschteils durchgehende Ausnehmungen vorgesehen, welche von den obengenannten Ausnehmungen in Umfangsrichtung regelmäßig beabstandet sind, insbesondere aber dieselbe axiale Position aufweisen und auf demselben Radialabstand angeordnet sind. Somit ist die Wartung und Ölbefüllung bei verschiedenen Drehlagen des Getriebes, also auch des Flügels, in gleicher Weise ausführbar. Vorzugsweise wird immer der in Gravitationsrichtung aktuell oben angeordnete Verschlussmittel 4 oder 5 geöffnet und das Schmieröl nachgefüllt.

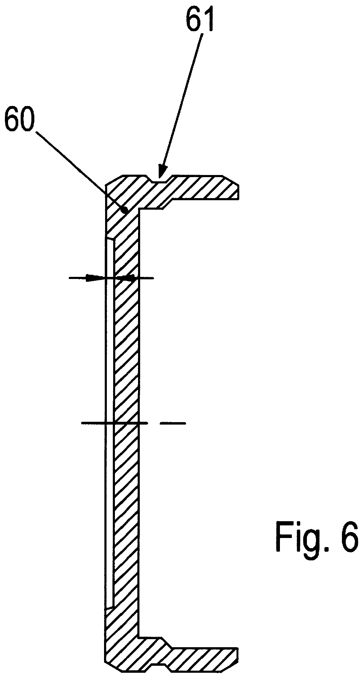

Figur 6 zeigt einen Querschnitt durch ein das Deckelteil 1 ersetzendes Deckelteil 60 für ein weiteres Ausführungsbeispiel, wobei die Kunststoffschicht 20 nicht dargestellt ist und im Bereich des Kragenabschnitts 22 eine Ringnut 61 ausgeführt ist, welche die Anlagefläche des Deckelteils 60 an der Innenwandung der eintreibenden Welle 8 unterbricht. Die Ringnut 61 bewirkt auch eine Verengung im Ansatzbereichs des Kragenabschnitts am Grundkörper des Deckelteils 60, so dass der Kragenabschnitt mit einer derartigen Vorspannung in die eintreibende Welle 8 eingebracht ist, dass der Kragenabschnitt elastisch an die Innenwandung angedrückt ist, insbesondere zusätzlich zur elastischen Verformung der Kunststoffschicht 20.

Bei einem weiteren unbeanspruchten Ausführungsbeispiel ist statt der Kunststoffbeschichtung 20 des Deckelteils 1 oder 60 eine Gummierung vorgesehen.

### Bezugszeichenliste

- 1: Deckelteil
- 2: Kupplungshülse
- 3: Flanschteil
- 4: erste Verschlussschraube
- 5: zweite Verschlussschraube
- 6: Hohlraum
- 7: Lager
- 8: eintreibende Welle
- 9: Sonnenrad
- 10: Hohlrad
- 11: Planetenträger
- 12: Planetenrad
- 13: Abtreibende Welle mit Ritzel
- 20: Kunststoffbeschichtung
- 21: Plattenabschnitt
- 22: Kragenabschnitt

## Patentansprüche

1. Getriebe mit einer in einem Flanschteil (3) mittels eines Lagers (7) gelagerten eintreibenden Welle (8),
wobei die eintreibende Welle (8) hohl ausgeführt ist,
wobei die eintreibende Welle (8) eine mittig in der eintreibenden Welle (8) angeordnete, axial durchgehende, Ausnehmung aufweist,
wobei die Ausnehmung der eintreibenden Welle (8) mittels eines Deckelteils (1) abgedichtet ist,
wobei das Lager (7) im Flanschteil (3) aufgenommen ist,
wobei das Flanschteil (3) zumindest eine durch das Flanschteil (3) durchgehende Ausnehmung aufweist,
wobei ein von der durchgehenden Ausnehmung des Flanschteils (3) überdeckter axialer Bereich mit einem von dem Lager (7) überdeckten axialen Bereich zumindest überlappt,
**dadurch gekennzeichnet, dass**
eine Innenverzahnung einer Kupplungshülse (2) mit einer Außenverzahnung der eintreibenden Welle (8) und mit einer Verzahnung eines Sonnenrads (9) des Getriebes im Eingriff steht,
wobei das Deckelteil (1) einen mit einer Kunststoffbeschichtung (20) versehenen metallischen Grundkörper aufweist.

2. Getriebe nach Anspruch 1,
**dadurch gekennzeichnet, dass**
die Kunststoffbeschichtung (20) eine Innenwandung der eintreibenden Welle (8) berührt.

3. Getriebe nach mindestens einem der vorangegangenen Ansprüche,
**dadurch gekennzeichnet, dass**
das Flanschteil (3) eine mittig angeordnete durchgehende Bohrung aufweist, in welcher das Lager (7) aufgenommen ist.

4. Getriebe nach mindestens einem der vorangegangenen Ansprüche,
**dadurch gekennzeichnet, dass**
das Flanschteil (3) mit einem Gehäuseteil des Getriebes verbunden ist, wobei ein Verbindungsbereich auf größerem Radialabstand angeordnet ist als das Lager (7).

5. Getriebe nach mindestens einem der vorangegangenen Ansprüche,
**dadurch gekennzeichnet, dass**
im Flanschteil (3) ein Wellendichtring aufgenommen ist, der auf der eintreibenden Welle (8) läuft.

6. Getriebe nach mindestens einem der vorangegangenen Ansprüche,
**dadurch gekennzeichnet, dass**
die eintreibende Welle (8) eine Innenverzahnung aufweist.

7. Getriebe nach mindestens einem der vorangegangenen Ansprüche,
**dadurch gekennzeichnet, dass**
die durch das Flanschteil (3) durchgehende Ausnehmung mit einem Verschlussmittel verschlossen ist,
wobei das Verschlussmittel einen Dauermagnet aufweist, insbesondere zum Herausziehen von ferromagnetischen Partikeln aus einem Schmieröl des Getriebes.

8. Getriebe nach mindestens einem der vorangegangenen Ansprüche,
**dadurch gekennzeichnet, dass**
mehrere durch das Flanschteil (3) durchgehende Ausnehmungen in Umfangsrichtung regelmäßig voneinander beabstandet sind.

9. Getriebe nach mindestens einem der vorangegangenen Ansprüche,
**dadurch gekennzeichnet, dass**
das Sonnenrad (9) mit Planetenrädern im Eingriff ist, welche mit einer Innenverzahnung eines Hohlrades (10) im Eingriff sind, wobei die Planetenräder auf einem Planetenträger (11) drehbar gelagert angeordnet sind, der direkt oder indirekt mit einer abtreibenden Welle (13) verbunden ist.

10. Getriebe nach Anspruch 9,
**dadurch gekennzeichnet, dass**
die abtreibende Welle (13) eine Verzahnung aufweist oder mit einem Verzahnteil drehfest verbunden ist, so dass ein anzutreibendes Hohlrad, das drehfest mit einem Flügel eines Windkraftwerks verbunden ist, antreibbar ist.

11. Getriebe nach mindestens einem der vorangegangenen Ansprüche,
**dadurch gekennzeichnet, dass**
die Verzahnung oder die Verzahnungen der eintreibenden Welle (8) mittels eines durchgehenden Bearbeitungsverfahrens hergestellt sind.

## Claims

1. A gear unit with an input shaft (8) mounted in a flange part (3) by means of a bearing (7),
wherein the input shaft (8) is formed to be hollow,
wherein the input shaft (8) has an axially continuous cutout arranged centrally in the input shaft (8),
wherein the cutout of the input shaft (8) is sealed off by means of a cover part (1),
wherein the bearing (7) is received in the flange part (3),
wherein the flange part (3) has at least one cutout which passes through the flange part (3),
wherein an axial region covered by the through-cutout of the flange part (3) at least overlaps with an axial region covered by the bearing (7),
**characterised in that**
internal gearing of a coupling sleeve (2) is engaged with external gearing of the input shaft (8) and with gearing of a sun wheel (9) of the gear unit,
wherein the cover part (1) has a metal base body provided with a plastics-material coating (20).

2. A gear unit according to Claim 1,
**characterised in that**
the plastics-material coating (20) touches an inner wall of the input shaft (8).

3. A gear unit according to at least one of the preceding claims,
**characterised in that**
the flange part (3) has a centrally arranged through-bore in which the bearing (7) is received.

4. A gear unit according to at least one of the preceding claims,
**characterised in that**
the flange part (3) is connected to a housing part of the gear unit, with a connection region being arranged at a greater radial distance than the bearing (7).

5. A gear unit according to at least one of the preceding claims,
**characterised in that**
a shaft sealing ring which runs on the input shaft (8) is received in the flange part (3).

6. A gear unit according to at least one of the preceding claims,
**characterised in that**
the input shaft (8) has internal gearing.

7. A gear unit according to at least one of the preceding claims,
**characterised in that**
the cutout which passes through the flange part (3) is closed with a closure means,
wherein the closure means has a permanent magnet, in particular for extracting ferromagnetic particles from a lubricating oil of the gear unit.

8. A gear unit according to at least one of the preceding claims,
**characterised in that**
a plurality of cutouts which pass through the flange part (3) are spaced apart regularly from one another in the peripheral direction.

9. A gear unit according to at least one of the preceding claims,
**characterised in that**
the sun wheel (9) is engaged with planet wheels which are engaged with internal gearing of a ring gear (10), the planet wheels being arranged rotatably mounted on a pinion cage (11) which is connected directly or indirectly to an output shaft (13).

10. A gear unit according to Claim 9,
**characterised in that**
the output shaft (13) has gearing or is connected in rotation-resistant manner to a toothed part, so that a ring gear which is to be driven, which is connected in rotation-resistant manner to a blade of a wind power station, can be driven.

11. A gear unit according to at least one of the preceding claims,
**characterised in that**
the gearing or the sets of gearing of the input shaft (8) are produced by means of a through-machining process.

## Revendications

1. Transmission équipée d'un arbre d'entrée (8) monté dans une partie de bridage (3) au moyen d'un palier (7),
lequel arbre d'entrée (8) est de réalisation creuse,
ledit arbre d'entrée (8) étant muni d'un évidement axialement ininterrompu, occupant un emplacement central dans ledit arbre d'entrée (8),
l'étanchéité de l'évidement de l'arbre d'entrée (8) étant assurée au moyen d'une partie (1) formant couvercle,
le palier (7) étant logé dans la partie de bridage (3),
laquelle partie de bridage (3) est pourvue d'au moins un évidement traversant ladite partie de bridage (3) de part en part,
sachant qu'une région axiale, couverte par l'évidement traversant de la partie de bridage (3), se trouve au moins en chevauchement avec une région axiale couverte par le palier (7),
**caractérisée par le fait**
**qu'**une denture intérieure d'une douille d'accouplement (2) est en prise avec une denture extérieure de l'arbre d'entrée (8), et avec une denture d'une roue planétaire (9) de ladite transmission,
la partie (1), formant couvercle, comportant un corps de base métallique doté d'un revêtement (20) en matière plastique.

2. Transmission selon la revendication 1,
**caractérisée par le fait que**
le revêtement (20) en matière plastique est en contact avec une paroi intérieure de l'arbre d'entrée (8).

3. Transmission selon au moins l'une des revendications précédentes,
**caractérisée par le fait que**
la partie de bridage (3) présente un perçage ininterrompu occupant un emplacement central, dans lequel le palier (7) est logé.

4. Transmission selon au moins l'une des revendications précédentes,
**caractérisée par le fait que**
la partie de bridage (3) est reliée à une partie formant carter de ladite transmission, une zone de liaison étant située à une plus grande distance radiale que le palier (7).

5. Transmission selon au moins l'une des revendications précédentes,
**caractérisée par le fait**
**qu'**une bague d'étanchement, douée de mobilité sur l'arbre d'entrée (8), est logée dans la partie de bridage (3).

6. Transmission selon au moins l'une des revendications précédentes,
**caractérisée par le fait que**
l'arbre d'entrée (8) est muni d'une denture intérieure.

7. Transmission selon au moins l'une des revendications précédentes,
**caractérisée par le fait que**
l'évidement, traversant la partie de bridage (3) de part en part, est obturé par un moyen d'obturation,
lequel moyen d'obturation comporte un aimant permanent, notamment en vue de l'expulsion de particules ferromagnétiques présentes dans une huile de lubrification de ladite transmission.

8. Transmission selon au moins l'une des revendications précédentes,
**caractérisée par le fait que**
plusieurs évidements, traversant la partie de bridage (3) de part en part, sont régulièrement espacés les uns des autres dans la direction périphérique.

9. Transmission selon au moins l'une des revendications précédentes,
**caractérisée par le fait que**
la roue planétaire (9) est en prise avec des pignons satellites engrenant dans une denture intérieure d'une roue creuse (10), lesdits pignons satellites étant montés à rotation sur un porte-satellites (11) relié à un arbre de sortie (13), directement ou indirectement.

10. Transmission selon la revendication 9,
**caractérisée par le fait que**
l'arbre de sortie (13) est muni d'une denture ou est relié à une partie dentée, avec verrouillage rotatif, permettant ainsi d'entraîner une roue creuse qui doit être menée et est reliée, avec verrouillage rotatif, à une pale d'une éolienne.

11. Transmission selon au moins l'une des revendications précédentes,
**caractérisée par le fait que**
la denture, ou les dentures de l'arbre d'entrée (8) est (sont) produite(s) au moyen d'un procédé d'usinage en continu.
